# EUROPEAN PATENT APPLICATION

(11) **EP 4 572 363 A1**
(43) Date of publication of application: **18.06.2025**
(21) Application number: 24213041.7
(22) Date of filing: 14.11.2024
(51) Int. Cl.: H04W 12/50, G06F 3/01, H04W 4/02

(54) **A PAIRABLE DEVICE**

(30) Priority: 12.12.2023 FI 20236364
(71) Applicant: Pixieray Oy, 02630 Espoo (FI)
(72) Inventor: Auranen, Timo, 33720 Tampere (FI)
(74) Representative: Moosedog Oy

(57) **Abstract**

Disclosed is a pairable device (100) and a method (200) for securely connecting the pairable device (100). The pairable device (100) comprises at least one first sensor (102) and a controller (106). The controller (106) is configured to receive positional data from the at least one first sensor (102), process the positional data to detect an orientation of the pairable device (100), determine a current pairing condition based on at least the detected orientation, wherein the current pairing condition is one of pairable, or non-pairable and transmit a pairing request, via a communication interface (110), to at least one user device (108) to enable pairing based on at least the current pairing condition.

## Description

### TECHNICAL FIELD

The present disclosure generally relates to communication security. Specifically, the present disclosure relates to a pairable device. Moreover, the present disclosure relates to a method for securely connecting a pairable device.

### BACKGROUND

With the proliferation of wireless electronic devices in recent times, wireless connectivity between electronic devices has become increasingly prevalent. The pervasiveness of wireless electronic devices has revolutionized communication and connectivity, transforming the way we interact with the world around us. From smartphones and laptops to smart home appliances and wearable technology, wireless connectivity has become an indispensable part of our lives. However, this increased reliance on wireless networks has also introduced potential security vulnerabilities, raising concerns about unauthorized data access, device control, and even user surveillance. The proliferation of wireless devices has created an attractive target for malicious actors, leading to an increase in the risk and frequency of cyberattacks. These attacks can range from data breaches and identity theft to device hijacking and even physical harm.

Conventionally, some solutions have been developed to address the aforementioned security vulnerabilities; however, these solutions are unable to keep up with the ongoing endeavour of secure wireless connectively as malicious actors continuously develop new attack techniques. In an example, conventional Bluetooth pairing involves Graphical User Interface (GUI) pairing, wherein the user initiates the pairing process through the GUI of an associated user device, selecting the Bluetooth device from a list of available devices and following on-screen instructions. In another example, conventional Bluetooth pairing involves physical button pairing, wherein the user manually triggers the pairing mode on the Bluetooth device by pressing a physical button or combination of buttons. This initiates the pairing process, and the user then selects the device from the user device's GUI. However, these conventional solutions are not without their limitations and are susceptible to vulnerabilities that can be exploited by malicious attackers to gain unauthorized access to devices and networks.

Moreover, to address these growing security concerns, a robust and secure connection mechanism is essential. The mechanism should encompass various communication mediums, including Bluetooth Low Energy (BLE), Wi-Fi, and cellular networks, to ensure seamless connectivity while safeguarding against cyber threats. Thus, recognizing the vulnerabilities of existing wireless mediums, the need for a reliable and secure means for wireless connection has become increasingly evident. This need has driven the development of advanced security protocols and encryption techniques that aim to protect wireless communications from unauthorized access and manipulation.

Therefore, in light of the foregoing discussion, there exists a need to overcome the aforementioned drawbacks and provide an improve device or a method to securely and reliably connect with other user devices.

### SUM MARY

The aim of the present disclosure is to provide a pairable device and a method for securely connecting the pairable device in order to improve the reliability and security of such pairable devices during connection (or pairing) with other devices and eliminate security vulnerabilities associated therewith in an efficient and accurate manner. Moreover, the pairable device and the method enables the user to regulate such pairing process such that unauthorized user(s) without knowledge of the pairing process are prevented from gaining access and thereby enhancing the security and reliability of the pairable device and the method. The aim of the present disclosure is achieved by a pairable device and a method for securely connecting the pairable device, as defined in the appended independent claims to which reference is made to. Advantageous features are set out in the appended dependent claims.

In a first aspect, the present disclosure provides a pairable device, comprising:
- at least one first sensor; and
- a controller configured to:
   - receive positional data from the at least one first sensor;
   - process the positional data to detect an orientation of the pairable device;
   - determine a current pairing condition based on at least the detected orientation, wherein the current pairing condition is one of pairable, or non-pairable and wherein the controller is configured to determine the current pairing condition as pairable when:
      - the pairable device is not being worn by a user;
      - the pairing mode is enabled; and
      - the determined orientation is upside down; and
      - transmit a pairing request, via a communication interface, to at least one user device to enable pairing based on at least the current pairing condition.

In a second aspect, the present disclosure provides a method for securely connecting a pairable device, the method comprising:
- receiving positional data from the at least one first sensor;
- processing the positional data to detect an orientation of the pairable device;
- determining a current pairing condition based on at least the detected orientation, wherein the current pairing condition is one of pairable, or non-pairable and wherein the current pairing condition is determined as pairable when:
   - the pairable device is not being worn by a user;
   - the pairing mode is enabled; and
   - the determined orientation is upside down; and
   - transmitting a pairing request to at least one user device, via a communication interface, to enable pairing with the pairable device based on at least the current pairing condition.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 is a block diagram of a pairable device;
FIG. 2 is an illustration of a flowchart listing steps involved in a method for security connecting a pairable device;
FIG. 3A is a perspective side view of an exemplary pairable device; and
FIG. 3B is a perspective front view of the exemplary pairable device of FIG. 3A, in accordance with one or more embodiments of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In a first aspect, the present disclosure provides a pairable device, comprising:
- at least one first sensor; and
- a controller configured to:
   - receive positional data from the at least one first sensor;
   - process the positional data to detect an orientation of the pairable device;
   - determine a current pairing condition based on at least the detected orientation, wherein the current pairing condition is one of pairable, or non-pairable and wherein the controller is configured to determine the current pairing condition as pairable when:
      - the pairable device is not being worn by a user;
      - the pairing mode is enabled; and
      - the determined orientation is upside down; and
      - transmit a pairing request, via a communication interface, to at least one user device to enable pairing based on at least the current pairing condition.

In a second aspect, the present disclosure provides a method for securely connecting a pairable device, the method comprising:
- receiving positional data from the at least one first sensor;
- processing the positional data to detect an orientation of the pairable device;
- determining a current pairing condition based on at least the detected orientation, wherein the current pairing condition is one of pairable, or non-pairable and wherein the current pairing condition is determined as pairable when:
   - the pairable device is not being worn by a user;
   - the pairing mode is enabled; and
   - the determined orientation is upside down; and
- transmitting a pairing request to at least one user device, via a communication interface, to enable pairing with the pairable device based on at least the current pairing condition.

The present disclosure provides a pairable device and a method for securely connecting the pairable device. The pairable device and the method provides a secure and reliable pairing medium and/or process to eliminate security vulnerabilities associate with pairing (or connection) of wireless and/or electronic devices such as, possibility of malicious attacks, and thus, improves the security and reliability of the pairable device. Throughout the present disclosure, the term *"pairable device"* as used herein refers to an electronic device configured to be paired (or connected) with other electronic devices associated with a user (such as, mobile phones, laptops, etc.). Alternatively stated, the pairable device refers to an electronic device that is capable of establishing a secure wireless connection with another device, typically a user device such as, but not limited to, a smartphone, tablet, or computer. The pairing process of the pairable device may involve exchanging authentication information and negotiating a communication protocol to enable data exchange and interaction therebetween. In an embodiment, the pairable device is a handheld device. For example, the pairable (handheld) device includes, but is not limited to, mobile computers such as, notebook personal computer (PC), ultra-mobile PC, handheld PC, personal digital assistant (PDA), graphing calculator, pocket computer (largely obsolete), handheld gaming consoles, etc., media recorders such as, digital cameras, digital audio recorders, media players, e-book readers, etc., and communication devices such as, mobile phone, cordless telephone, digital pagers, and the like. In another embodiment, the pairable device is a wearable device. For example, the pairable (wearable) device includes, but is not limited to, fitness trackers, smart watches, e-textiles, wireless earbuds or headsets, head-mounted displays, smart fashion accessories, and the like. In yet another embodiment, the pairable device includes smart glasses, wherein the smart glasses may include at least one of smart lenses or optical lenses, frame, sensor(s), power source, controller (or processor), and the like.

With the proliferation of wireless electronic devices in recent times, wireless connectivity between electronic devices has become increasingly prevalent. The pervasiveness of wireless electronic devices has revolutionized communication and connectivity, transforming the way we interact with the world around us. From smartphones and laptops to smart home appliances and wearable technology, wireless connectivity has become an indispensable part of our lives. However, this increased reliance on wireless networks has also introduced potential security vulnerabilities, raising concerns about unauthorized data access, device control, and even user surveillance. The proliferation of wireless devices has created an attractive target for malicious actors, leading to an increase in the risk and frequency of cyberattacks. These attacks can range from data breaches and identity theft to device hijacking and even physical harm.

Conventionally, some solutions have been developed to address the aforementioned security vulnerabilities; however, these solutions are unable to keep up with the ongoing endeavour of secure wireless connectively as malicious actors continuously develop new attack techniques. In an example, conventional Bluetooth pairing involves Graphical User Interface (GUI) pairing, wherein the user initiates the pairing process through the GUI of an associated user device, selecting the Bluetooth device from a list of available devices and following on-screen instructions. In another example, conventional Bluetooth pairing involves physical button pairing, wherein the user manually triggers the pairing mode on the Bluetooth device by pressing a physical button or combination of buttons. This initiates the pairing process, and the user then selects the device from the user device's GUI. However, these conventional solutions are not without their limitations and are susceptible to vulnerabilities that can be exploited by malicious attackers to gain unauthorized access to devices and networks.

Moreover, to address these growing security concerns, a robust and secure connection mechanism is essential. The mechanism should encompass various communication mediums, including Bluetooth Low Energy (BLE), Wi-Fi, and cellular networks, to ensure seamless connectivity while safeguarding against cyber threats. Thus, recognizing the vulnerabilities of existing wireless mediums, the need for a reliable and secure means for wireless connection has become increasingly evident. This need has driven the development of advanced security protocols and encryption techniques that aim to protect wireless communications from unauthorized access and manipulation.

Therefore, to overcome the aforementioned drawbacks and vulnerabilities with existing solutions, the present disclosure provides an improved and secure pairable device and method capable of providing seamless connectivity across a host of connectivity mediums and devices while eliminating the aforementioned security vulnerabilities in a cost-effective and efficient manner.

The pairable device of the present disclosure comprises at least one first sensor and a controller operatively coupled with the at least one first sensor. The pairable device comprises the controller and the at least one first sensor operatively coupled therewith for enabling connection of the pairable device in a secure and reliable manner. Herein, the pairable device may also comprise one or more additional elements selected from, but not limited to, a display, a power source, an operating system, a housing or frame and associated electrical circuitry required for operation. It will be appreciated that the inherent elements of the pairable device vary based on the type and intended application and may vary without any limitations to the present disclosure. For example, wherein the pairable device includes smart glasses, the smart glasses comprises at least one of a frame, an optical element (or lens), a battery, a wireless connector, an operating system, at least one first sensor, a camera, a speaker, a microphone, and the like.

Throughout the present disclosure, the term *"first sensor"* as used herein refers to a type of sensor operable to generate positional data associated with the pairable device, wherein the positional data comprises at least one of a position, an orientation, or a state, of the pairable device. For example, the at least one first sensor may be at least one of a light sensor, a movement sensor, a proximity sensor, a magnetometer, an accelerometer, a navigation sensor (such as, GPS receiver, GNSS receiver, etc.), an inertial measurement unit (IMU), or an imaging sensor. The at least one first sensor enables determination of a current state, location, or orientation of the pairable device via generation of the positional data in order to determine whether the pairable device may be connected with other user devices or not. It will be appreciated that the type of the at least one first sensor to be utilized depends on the specific implementational requirements of the embodiment and may be based on at least one of, the required accuracy, the required range of measurement, cost constraints, and power consumption.

As an example the first sensor for the pairable device is selected from one of: an accelerometer, a motion sensor, a gyroscope, a magnetometer, a rotary sensor, a tilt sensor, an inertial measurement unit, or a combination thereof; and the second sensor is selected from one of: a light sensor, a touch sensor, a position sensor, a proximity sensor, a skin conductance sensor, or a combination thereof.

Further, throughout the present disclosure, the term *"controller"* as used herein refers to a structure and/or module that includes programmable and/or non-programmable components configured to store, process and/or share information and/or signals for performing one or more operations of the pairable device. For example, the controller may be a microcontroller (or microcontroller unit), a processor (or a central processing unit), a graphical processing unit (GPU), a digital signal processor (DSP), an application-specific integrated circuit (ASIC), a field programmable gate array (FPGA), a single board computer (SBC), and the like. The controller is operatively coupled to the at least one first sensor for controlling the functioning or operation of the wearable device. In the present examples, the controller may include components such as memory, a controller, a network adapter, and the like, to store, process and/or share information with other components, such as a temperature sensor, a remote server unit, a database, input-output interfaces, etc. Additionally, the elements of the pairable device may communicate with each other using a communication interface such as, Wi-Fi, NFC, or Bluetooth (or BLE), or via wired connections.

The controller of the pairable device is further configured to receive positional data from the at least one first sensor. The receiving of positional data from the at least one first sensor relates to data acquisition from the at least one first sensor, and may involve sampling the sensor values at regular intervals, or processing the raw positional data from the at least one first sensor for conditioning thereof i.e., for removing noise, sensor bias, and other artifacts from the positional data in order to improve the accuracy thereof. The term *"positional data"* as used herein refers to the location or position information associated with the pairable device. For example, the positional data includes, but is not limited to, the location of the pairable device (such as, location coordinates in a cartesian plane, or latitude and longitude, or altitude, timestamps, or a combination thereof), the orientation of the pairable device (such as, in degrees, or in radians), etc. The positional data of the pairable device enables determination of the exact position and/or orientation of the pairable device in a given plane. By combining positional data from the at least one first sensor (i.e., different first sensors), the pairable device can obtain positional data with high accuracy and precision. In an example, GPS and IMU data can be fused to provide continuous positioning updates even when GPS signals are temporarily blocked. In another example, positional data from a magnetometer can be used to calibrate the orientation of the pairable device, and positional data from a proximity sensor can be used to detect obstacles or trigger actions based on the proximity of objects (or persons).

In an implementational scenario, the at least one first sensor of the pairable device includes a GPS receiver, for example, a user wearing a smart glasses with built-in GPS capabilities. Herein, the smart glasses is yet to be paired with a user device, such as, a smartphone of the user. The at least one first sensor i.e., the GPS receiver, receives signals from satellites and converts them into positional data and thereby transfers the positional data securely to the controller operatively coupled therewith. The controller, upon receiving the positional data, may further process the positional data to provide real-time information about the location and/or orientation of the pairable device.

The controller of the pairable device is further configured to process the positional data to detect an orientation of the device. Typically, upon receiving the positional data from the at least one first sensor, the controller is further configured to process the positional data in order to accurately and precisely determine the orientation of the pairable device such that the determined orientation may further be utilized to determine pairing ability of the pairable device i.e., whether the pairable device can be paired with other devices or not. Optionally, the processing of the positional data involves at least one of data fusion, data smoothing, and data localization. The data fusion involves combination of positional data from the at least one first sensor, in order to improve the precision and accuracy of the positional data, for example, via usage of filtering techniques including, but not limited to, Kalman filtering, particle filtering, Butterworth filtering, etc. Further, the data smoothing involves removal of irregularities from the positional data in order to provide a smoother and accurate representation of the positional data indicative of movement of the pairable device. For example, the raw positional data may include spikes and fluctuations that might increase the difficulty in interpretation of the positional data via the controller. Thus, one or more data smoothing techniques may be applied on the positional data such as, but not limited to, a low-pass filtering, moving average, median filtering, exponential moving average, and the like, to provide a smoother and accurate representation of the positional data. The specific processing steps that are used via the controller will vary depending on the type of pairable device and the intended application. For example, a smart glasses used for media recording requires a more sophisticated processing pipeline than a fitness tracker that is used to track steps and distance. Beneficially, the processing of the positional data enables elimination, or at least reduction, of the irregularities and/or errors of the positional data and therefore improves the accuracy and precision of the determined orientation of the pairable device.

The controller of the pairable device is further configured to determine a current pairing condition based on at least the detected orientation, wherein the current pairing condition is one of pairable, or non-pairable. The term *"current pairing condition"* as used herein refers to a current state of the pairable device indicative of its pairing ability with other electronic devices. Typically, to enhance the security of the pairable device and eliminate security vulnerabilities existing during pairing or connection of the pairable device, the controller is further configured to determine the current pairing condition of the pairable device i.e., whether the pairable device is in a required state to be paired with other user device(s) or not. Alternatively stated, the controller is programmed to utilize at least the determined orientation, as determined via the at least one first sensor, to determine whether the pairable device is currently in a pairable state or not. Herein, the controller analyses at least the determined orientation and accordingly determines one of two possible pairing conditions i.e., pairable or non-pairable. Herein, when the current pairing condition of the pairable device is determined as 'pairable', the pairable device is actively seeking a pairing connection and is ready to establish a connection with another device and may advertise its presence and/or listen for pairing requests from other devices; whereas, when the current pairing condition of the pairable device is determined as 'non-pairable', the pairable device is not currently available for pairing, for example, when turned off, in a power-saving mode, or explicitly set to the non-pairable mode by the user. The current pairing condition determines whether a given pairable device is actively seeking a pairing connection or is currently unavailable for pairing. This condition is typically determined by the controller, which monitors sensor data, user actions, and software settings to determine the readiness to pair associated with the pairable device. In an exemplary scenario, wherein the pairable device is a smart glasses to be paired with a user device such as, a smartphone. The controller may deem the smart glasses as pairable when initially worn (or put on) via a user, and thereafter deemed to be in a non-pairable state by the controller since the smart glasses are required to be detected in a proper (or preferred) position, for example, at a specific orientation, or positioned on a user's head or temple, before being paired with another device. Thus, when the smart glasses are set at a preferred position or orientation, the at least one first sensor would detect the change in orientation and relay the detected information to the controller. Correspondingly, the controller then determines the pairable device in a pairable state and thus, enables initiation of the pairing process with other devices. Beneficially, the determination of the current pairing condition of the pairable device reduces the difficulty and thereby makes pairing of the pairable device easier by eliminating the need to manually enable, or disable, the pairing mode thereof. Further, such an implementation prevents accidental pairing of the pairable device, for example, when the pairable device is accidentally placed in a pairable state. Moreover, the current pairing condition ensures that pairing connections are established securely only when intended via authorized users, and enable better management of paring connections while simultaneously safeguarding and enhancing privacy and security of the pairable device.

In one or more embodiments, the pairable device further comprises at least one second sensor configured to detect whether the pairable device is being worn by a user and based on the detection, the controller is further configured to determine the current pairing condition. Herein, the controller is configured to receive sensor data from the at least one second sensor and thereby process the received sensor data to determine the current pairing condition. In one or more embodiments, the second sensor is selected from one of: a light sensor, a touch sensor, a position sensor, a proximity sensor, a skin conductance sensor, or a combination thereof. Optionally, the controller may utilize one or more algorithms to analyse the sensor data, such as, but not limited to, thresholding, pattern recognition, and machine learning algorithms. Specifically, in thresholding algorithms, the controller compares the sensor data values against predefined thresholds, wherein if the values of the sensor data exceed the predefined threshold, the pairable device is deemed as being worn by the user and vice versa. Further, in pattern recognition algorithms, the controller may analyse the sensor data over a period of time to identify patterns indicative of whether the pairable device is being worn or not. Furthermore, the controller may utilize machine learning algorithms to learn from past data and make informed decisions about whether the device is being worn.at least one second sensor is configured to determine. Beneficially, incorporating the at least one second sensor (also referred to as, wear detection sensors) into the pairable device, the user experience and security is enhanced and enables context-aware pairing of the pairable device while simultaneously streamlining the pairing process of the pairable device. Additionally, such an implementation enables protection of sensitive data, and provides a more personalized and improved user experience.

In one or more embodiments, the controller is further configured to determine the current pairing condition as pairable when the pairable device is not being worn by the user, or the pairing mode is enabled, and the determined orientation is one of upside down, or in a range of 90 degrees to 270 degrees, or deemed as unavailable. Herein, the pairable device may be a wearable device such as, a smart glasses, that is enabled to be paired when not being worn by a user to prevent unauthorized access via malicious actors during operation. Moreover, the current pairing condition is determined as pairable when either set into a pairable mode via the user (manually), or when the pairable device is oriented at a predefined orientation set by the user in a range of 90 degrees to 270 degrees. Beneficially, the aforementioned pairing criterion of the pairable device enables secure and reliable connection only when intended and eliminates security vulnerabilities of the pairable device in order to improve the privacy and security thereof.

The controller of the pairable device is further configured to transmit a pairing request, via a communication interface, to at least one user device to enable pairing based on at least the current pairing condition. The term *"pairing request"* refers to a command signal or a message sent via the pairable device to initiate the process of establishing a secure connection therebetween. The pairing request includes data required for enabling the pairing between the at least one user device and the pairable device, and includes at least one of, but not limited to, a device identifier (such as, MAC address or Bluetooth address), device type, a type of pairing protocol (such as Bluetooth Low Energy (BLE) or Secure Simple Pairing (SSP)), authentication data (such as a passcode or cryptographic keys), and additional pairing data depending on the type of pairable device and the at least one user device being utilized. The pairing request is transmitted by the controller for facilitating the establishment of secure and reliable connections between the pairable device and the at least one user device via exchanging necessary information and initiating the pairing process, and therefore enable the devices to communicate seamlessly and share data securely. It will be appreciated that the communication interface utilized depends on the type of the pairable device and the supported wireless technologies. Herein, the communication interface may be at least one of Bluetooth Low Energy (BLE) i.e., a short-ranged wireless technology particularly well-suited for pairing wearable devices with smartphones, Near Field Communication (NFC) that enables close-range wireless communication for enabling pairing of the pairable device by simple physical contact between the pairable device and the at least one user device, Wi-Fi for pairing devices connected to a common Wi-Fi network, and the like.

In one or more embodiments, the controller is further configured to receive user device configuration, via the communication interface, from the at least one user device to enable connection therewith. Herein, the controller receives configuration information from the at least one user device, such as a smartphone, to establish a connection and enable communication therebetween to ensure that the pairable device can adapt to the user's preferences and settings on the at least one user device. For example, the user device configuration include, but is not limited to, pairing preferences (such as, manual or automatic), data sharing settings i.e., the extent and type of data that may be shared therebetween, notification preferences such as, type and frequency of notifications, device-specific settings such as, display settings, device information, communication protocol information, and the like. Beneficially, receiving the user device configuration is an essential aspect of establishing a user-centric connection between pairable devices and allows adaptation to the user's preferences and settings, such that the pairable device can provide a personalized, secure, and convenient user experience.

In one or more embodiments, the controller is further configured to transmit the pairing request if the number of connected user devices have not exceeded a predefined threshold. Typically, to prevent unauthorized access from malicious or unauthorized user(s), the predefined (user) threshold is set via the controller such that when the predefined threshold is reached, other user device(s) are prevented from initiating pairing with the pairable device. Herein, the predefined threshold may be varied by the user and wherein, the magnitude of the predefined threshold may be varied without any limitations to the present disclosure. For example, the predefined threshold may range between 1 to 10.

In one or more embodiments, the controller is further configured to detect a motion pattern of the device, via the at least one first sensor, to transmit the pairing request for enabling pairing with the at least one user device. The term *"motion pattern"* refers to a characteristic motion (or movement, or gesture, or activity), or a set of characteristic motions, of the pairable device. For example, the motion pattern includes linear motions, circular motions, periodic motions, rotatory motions, a random motion, or a combination thereof. The detection of the motion pattern involves analysing and processing the positional data from the at least one first sensor to identify characteristic motion patterns during movement of the pairable device. The positional data from the at least one first sensor may be collected at a high sampling rate and thereby processed via the controller in order to extract relevant features from the pre-processed positional data representative of the motion pattern(s) of the pairable device. Typically, a set of motion patterns are preconfigured into the controller, wherein each type of motion pattern may be associated with a predefined operation or command for the controller of the pairable device. Herein, upon detection of the preconfigured motion pattern(s) via the at least one first sensor, the controller is configured to transmit the pairing requires in order to enable pairing of the at least one user device. Beneficially, detection of the motion patterns allow only the authorized user to enable pairing of the pairable device and thereby eliminating the security vulnerabilities associated therewith. Further, optionally, the controller is further configured to implement one or more machine learning algorithms to classify the extracted features into the predefined (or preconfigured) motion patterns of the pairable device. Herein, the machine learning algorithm selected for detection of the motion pattern depends on several factors, including the specific motion patterns to be detected, the characteristics of the sensor data, the computational resources available, and the desired trade-off between accuracy and complexity. The machine learning algorithm may be selected from at least one of, but not limited to, Hidden Markov Models (HMMs), Dynamic Time Warping (DTW), Support Vector Machines (SVMs), Artificial Neural Networks (ANNs), Convolutional Neural Networks (CNNs), K-Nearest Neighbours (KNN), and the like. Furthermore, optionally, the controller is further configured to incorporate contextual information during processing of the positional data to improve the accuracy and precision of the detected motion pattern along with the security of the pairable device. For example, the incorporated contextual information includes, but is not limited to, the time of day, the location of the pairable device, user activity, distance of the pairable device from the user, and the like.

In one or more embodiments, the motion pattern detected via the at least one first sensor comprises at least one of an inverse flip motion, a rotatory motion, a zig-zag motion, or a user-defined motion. Herein, apart from the aforementioned preconfigured motion patterns, the user may further pre-configure a customized motion pattern (i.e., the user-defined motion) into the pairable device such that when performed by the user, the controller may transmit the pairing request to the at least one user device for enabling pairing therewith. Such an implementation allows only the authorized user (having knowledge of the preconfigured motion pattern) to enable pairing of the pairable device with other user device(s). Beneficially, the detected motion patterns provide an improved alternative to existing solutions and also improves the security and reliability of the pairable device by eliminating security vulnerabilities encountered during pairing of the pairable device with the at least one user device.

In one or more embodiments, the pairable device further comprises the at least one second sensor configured to detect whether the pairable device is being worn by a user and based on the detection, the controller is further configured to determine the pairing condition. Typically, when the pairable device is being worn by a user, the current pairing condition of the pairable device is 'non-pairable'. Alternatively, when the pairable device is not being worn by the user, the current pairing condition of the pairable device is 'pairable'. Beneficially, such an implementation prohibits pairing or connection with the pairable device when being worn by the user, as a result, during operation i.e., when being worn by the user, any and all access is denied and therefore eliminates the possibility of malicious attacks in order to improve the security of the pairable device. In another embodiment, when the pairable device is being worn by a user as detected by the second sensor, the controller is configured to transmit the pairing request only to a pre-paired user device. Thus, when the pairing device is being worn by the user, pairing with new user device(s) is prohibited and pairing with only pre-paired devices is allowed. Beneficially, such an implementation enhances the versatility of the pairable device while ensuring that unauthorized access is prohibited in order to provide enhanced security.

In one or more embodiments, the controller is further configured to receive a tap sequence, via the second sensor, entered by the user to transmit the pairing request. Herein, the second sensor is configured to detect the tap sequence entered by the user and thereby transmit the detected tap sequence to the controller such that the pairing request may be transmitted therefrom. Beneficially, the tap sequence triggers the transmission of the pairing request to the at least one user device, such as a smartphone and facilitates user-initiated pairing without the need for manual device selection or button presses. Moreover, such a tap sequence enhances the security and reliability of the pairable device by allowing access via authorized users having knowledge of the tap sequence and thereby eliminating access via unauthorized users and simultaneously, streamlining the pairing experience by eliminating the need for manual device selection and providing control to the user for initiating the pairing request. It will be appreciated that the tap sequence may be detected by the at least one first sensor and a dedicated second sensor may or may not be required depending upon the implementation.

In one or more embodiments, the pairable device further comprises a light arrangement configured to display a first light pattern to indicate activation of a pairing mode of the device, and display a second light pattern to indicate a successful connection with the at least one user device. The term *"light arrangement"* as used herein refers to a combination of one or more lighting devices integrated to the pairable device. For example, the one or more lighting devices of the light arrangement include, but are not limited to, light emitting diodes (LEDs) or neo-pixels, electrophoretic displays, fiber optics, electrophoretic displays, electroluminescent (EL) panels, and the like. The light arrangement typically consists of a series of LEDs or other light-emitting elements integrated into the device's design. The specific configuration of the light arrangement may vary depending on the device's form factor and aesthetic design. When the pairable device enters pairing mode, the light arrangement displays a distinct first light pattern. This pattern serves as a visual cue to the user that the device is actively seeking a pairing connection. The specific pattern may vary, but it is typically designed to be easily recognizable and distinguishable from other device states. Moreover, once the pairable device successfully establishes a connection with the at least one user device, the light arrangement transitions to a second light pattern indicative to the user that the connection has been established and the pairable device is ready for use. The second light pattern may differ in terms of color, intensity, or animation compared to the first light pattern. Beneficially, utilization of the light arrangement to indicate the current pairing condition, or the status of the pairing, provides an intuitive user experience via provision of clear and easily understandable cues, enhanced awareness, and provides a non-verbal communication medium without disrupting other activities or requiring user interaction.

In one or more embodiments, when the current condition of the pairable device is non-pairable, the controller is further configured to transmit a rejection message to the at least one user device upon receiving a pairing request therefrom. Typically, the pairing request may be initiated by either of the pairable device or the at least one user device and as such, when the pairing request is initiated (or transmitted) by the at least one user device, and when the current pairable condition is deemed as non-pairable, then the controller is further configured to transmit the rejection message as a response. Herein, the rejection message is indicative of a failed-pairing initiation and also the current pairing condition of the pairable device.

The present disclosure also provides a method for securely connecting a pairable device. The various embodiments and variants disclosed above apply *mutatis mutandis* to the present method without any limitations.

In another aspect, the present disclosure provides a method for securely connecting a pairable device. The method comprises receiving positional data from the at least one first sensor, processing the positional data to detect an orientation of the device, determining a current pairing condition based on at least the detected orientation, wherein the current pairing condition is one of pairable, or non-pairable and wherein the current pairing condition is determined as pairable when the pairable device is not being worn by a user, the pairing mode is enabled and the determined orientation is upside down, and transmitting a pairing request to at least one user device, via a communication interface, to enable pairing with the pairable device based on at least the current pairing condition. In an embodiment, the pairable device is a handheld device. For example, a smart phone, a wireless speaker, and the like. In another embodiment, the pairable device is a wearable device. For example, an eyewear, a smartwatch, and the like.

In one or more embodiments, the method further comprises receiving user device configuration from the at least one user device to enable connection with the pairable device.

In one or more embodiments, the method further comprises detecting a motion pattern of the pairable device via the at least one first sensor for transmitting the pairing request to enable pairing with the at least one user device.

In one or more embodiments, in the method, the current pairing condition is determined as pairable when the pairable device is not being worn by the user, the pairing mode of the pairable device is enabled, and the determined orientation is one of upside down, or in a range of 90 degrees to 270 degrees, or unavailable.

### DETAILED DESCRIPTION OF THE DRAWINGS

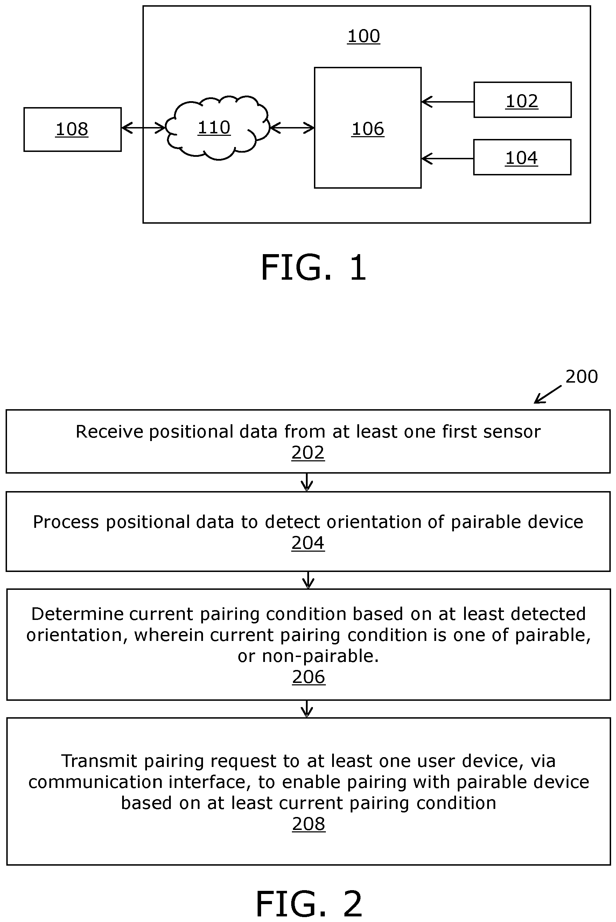

Referring to FIG. 1, illustrated is a block diagram of a pairable device 100, in accordance with one or more embodiments of the present disclosure. As shown, the pairable device 100 comprises at least one first sensor 102 and a controller 106 operatively coupled therewith. Herein, the controller 106 is configured to receive positional data from the at least one first sensor 102. Further, the controller 106 is configured to process the positional data to detect an orientation of the pairable device 100. Furthermore, the controller 106 is configured to determine a current pairing condition based on at least the detected orientation, wherein the current pairing condition is one of pairable, or non-pairable, and transmit a pairing request, via a communication interface 110, to at least one user device 108 to enable pairing based on at least the current pairing condition. Further, optionally, the pairable device 100 further comprises at least one second sensor 104 configured to detect whether the pairable device 100 is being worn by a user and based on the detection, the controller 106 is further configured to determine the current pairing condition.

Referring to FIG. 2, illustrated is a flowchart listing steps involved in a method 200 for securely connecting a pairable device 100, in accordance with one or more embodiments of the present disclosure. Herein, the method 200 includes steps 202, 204, 206 and 208. As shown, at a step 202, the method 200 comprises receiving positional data from the at least one first sensor 102. At a step 204, the method 200 further comprises processing the positional data to detect an orientation of the pairable device 100. At a step 206, the method 200 further comprises determining a current pairing condition based on at least the detected orientation, wherein the current pairing condition is one of pairable, or non-pairable. And, at a step 208 transmitting a pairing request to at least one user device 108, via a communication interface 110, to enable pairing with the pairable device 100 based on at least the current pairing condition.

The aforementioned steps are only illustrative and other alternatives can also be provided where one or more steps are added, one or more steps are removed, or one or more steps are provided in a different sequence without departing from the scope of the claims herein.

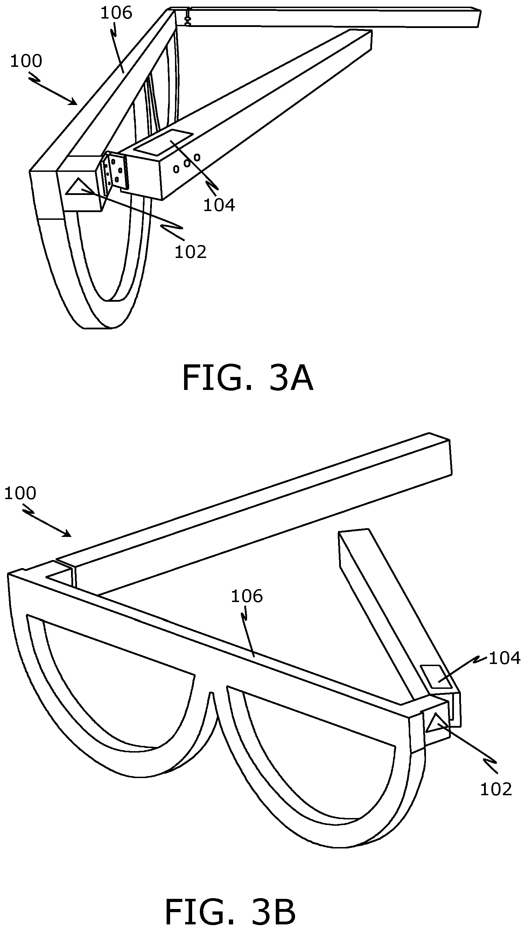

Referring to FIGs. 3A and 3B, collectively, illustrated are perspective views of an exemplary pairable device 100, in accordance with one or more embodiments of the present disclosure. Herein, the pairable device 100 is a smart glasses, wherein the pairable device 100 comprises a frame for housing various elements thereof such as, optical lenses, electrical circuitry, and the like. Referring to FIG. 3A, illustrated is a perspective side view of an exemplary pairable device 100 and Referring to FIG. 3B, illustrated is a perspective front view of the exemplary pairable device 100 of FIG. 3A. As shown in FIGs. 3A and 3B, collectively, the pairable device 100 comprises at least one first sensor 102 and a controller 106 operatively coupled therewith. Herein, the controller 106 is configured to receive positional data from the at least one first sensor 102. Further, the controller 106 is configured to process the positional data to detect an orientation of the pairable device 100. Furthermore, the controller 106 is configured to determine a current pairing condition based on at least the detected orientation, wherein the current pairing condition is one of pairable, or non-pairable, and transmit a pairing request, via a communication interface 110 (not visible), to at least one user device 108 (not shown) to enable pairing based on at least the current pairing condition. It will be appreciated that the pairable device is explained with respect to smart glasses for explanatory purposes and may be interchanged with other types of pairable devices such as, wearable or handheld devices, without any limitations to the present disclosure.

## Claims

1. A pairable device (100), comprising:
- at least one first sensor (102); and
- a controller (106) configured to:
- receive positional data from the at least one first sensor;
- process the positional data to detect an orientation of the pairable device;
- determine a current pairing condition based on at least the detected orientation, wherein the current pairing condition is one of pairable, or non-pairable and wherein the controller (106) is configured to determine the current pairing condition as pairable when:
- the pairable device is not being worn by a user;
- the pairing mode is enabled; and
- the determined orientation is upside down; and
- transmit a pairing request, via a communication interface (110), to at least one user device (108) to enable pairing based on at least the current pairing condition.

2. The pairable device (100) of claim 1, wherein the controller (106) is further configured to receive user device configuration from the at least one user device (108) to enable connection therewith.

3. The pairable device (100) of claim 1 or 2, wherein the controller (106) is further configured to detect a motion pattern of the pairable device, via the at least one first sensor (102), to transmit the pairing request for enabling pairing with the at least one user device (108).

4. The pairable device (100) of claim 3, wherein the motion pattern detected via the at least one first sensor (102) comprises at least one of:
- an inverse flip motion;
- a rotatory motion;
- a zig-zag motion; or
- a user-defined motion.

5. The pairable device (100) according to any of the preceding claims, further comprises at least one second sensor (104) configured to detect whether the pairable device is being worn by the user and based on the detection, the controller (106) is further configured to determine the current pairing condition.

6. The pairable device (100) of claim 5, when being worn by the user as detected by the second sensor (104), the controller (106) is configured to transmit the pairing request only to a pre-paired user device.

7. The pairable device (100) according to any of the preceding claims, wherein the controller (106) is further configured to receive a tap sequence, via the second sensor (104), entered by the user to transmit the pairing request.

8. The pairable device (100) according to any of the preceding claims, wherein the pairable device includes smart glasses.

9. A method (200) for securely connecting a pairable device (100), the method comprising:
- receiving positional data from the at least one first sensor (102);
- processing the positional data to detect an orientation of the pairable device;
- determining a current pairing condition based on at least the detected orientation, wherein the current pairing condition is one of pairable, or non-pairable and wherein the current pairing condition is determined as pairable when:
- the pairable device is not being worn by a user;
- the pairing mode is enabled; and
- the determined orientation is upside down; and
- transmitting a pairing request to at least one user device (108), via a communication interface (110), to enable pairing with the pairable device based on at least the current pairing condition.

10. The method (200) of claim 9, further comprising receiving user device configuration from the at least one user device (108) to enable connection with the pairable device (100).

11. The method (200) of claims 9 or 10, further comprising detecting a motion pattern of the pairable device (100) via the at least one first sensor (102) for transmitting the pairing request to enable pairing with the at least one user device (108).

12. The method (200) according to any of claims 9-11, wherein the pairable device (100) is a handheld device.

13. The method (200) according to any of claims 9-12, wherein the pairable device (100) is a wearable device.

14. The method (200) according to any of claims 9-13, wherein the pairable device (100) includes smart glasses.
